# EUROPEAN PATENT SPECIFICATION

(11) **EP 2 454 775 B1**
(45) Date of publication and mention of the grant of the patent: **28.08.2013**
(21) Application number: 10730864.5
(22) Date of filing: 24.06.2010
(51) Int. Cl.: H01M 8/04

(54) **FUEL CELL SYSTEM WITH WATER CONDENSATION AND ION EXCHANGER**
BRENNSTOFFZELLENSYSTEM MIT WASSERKONDENSATION UND IONENTAUSCHER
SYSTÉME DE PILE À COMBUSTIBLE AVEC CONDENSATION DE L'EAU ET ÉCHANGEUR D'IONS

(30) Priority: 14.07.2009 JP 2009165823
(43) Date of publication of application: 23.05.2012
(73) Proprietor: Honda Motor Co., Ltd., Minato-ku Tokyo 107-8556 (JP)
(72) Inventor: YOSHIMINE, Yuki, Wako-shi Saitama 351-0193 (JP)
(74) Representative: Prechtel, Jörg
(86) International application number: PCT/JP2010/061220
(87) International publication number: WO 2011/007676

(56) References cited:
- JP-A- 2008 098 019
- JP-A- 2008 300 058

## Description

### Technical Field

The present invention relates to a fuel cell system according to the preamble of claim 1 including a fuel cell module, a water supply apparatus, a water container, and a condenser.

### Background Art

A fuel cell system according to the preamble of claim 1 is known from JP 2008-098019 A.

Typically, a solid oxide fuel cell (SOFC) employs a solid electrolyte comprising ion-conductive solid oxide such as stabilized zirconia, for example. The electrolyte is interposed between an anode and a cathode to form an electrolyte electrode assembly. The electrolyte electrode assembly is interposed between separators (bipolar plates). In use, normally, predetermined numbers of the electrolyte electrode assemblies and the separators are stacked together to form a fuel cell stack.

As the fuel gas supplied to the fuel cell, normally, a hydrogen gas generated from hydrocarbon raw material by a reformer is used. In general, in the reformer, a reformed raw material gas is obtained from hydrocarbon raw material of a fossil fuel or the like, such as methane or LNG, and the reformed raw material gas undergoes, for example, steam reforming to produce a reformed gas (fuel gas).

In the steam reforming, it is necessary to supply water corresponding to the amount of water vapor used in the reforming reaction. In one method adopted for this purpose, the required amount of water is supplied from the outside. As an alternative method, a water collection (recovery) method by condensing exhaust gas produced by power generation of the fuel cell to achieve perfect circulation of water required for reforming (water self-sustained operation) is promising. In this method, in order to remove impurities from the condensed water, water processing means needs to be used.

For example, in the tank structure disclosed in Japanese Laid-Open Patent Publication No. 09-019678, as shown in FIG. 13, the internal space of a tank 1a is divided into two chambers 3a, 5a by filter material 2a. A collection pipe 4a for condensing/collecting water vapor in the exhaust gas from a fuel cell (not shown) is connected to an upper portion of one tank chamber 3a.

A processed water supply pipe 7a is connected to a lower position of the other tank chamber 5a. A water processing apparatus 6a for purifying the water into almost pure water using activated carbon, ion exchange resin, or the like is provided in the processed water supply pipe 7a. A processed water circulating pipe 8a is connected to an upper position of the tank chamber 5a for returning excessive processed water in the processed water supply pipe 7a to the tank chamber 5a.

Further, in a water processing apparatus disclosed in Japanese Laid-Open Patent Publication No. 2005-129334, as shown in FIG. 14. a condensed water tank 1b, a deionizer apparatus 2b, a water pump 3b, a pure water tank 4b, a reformed gas supply unit 5b, and a fuel cell 6b are provided. Hydrogen in the reformed gas that has not been consumed in the fuel cell 6b is introduced into a combustor 7b and is burned therein into combustion exhaust gas, and thereafter the combustion exhaust gas is condensed in the latent heat collection heat exchanger 8b into condensed water. The condensed water is stored in the condensed water tank 1b. More specifically, after carbonate ions dissolved in the condensed water from the latent heat collection heat exchanger 8b are removed by a Raschig ring 9b provided at a position where the condensed water is dropped, the condensed water is stored in the condensed water tank 1b.

Further, in a fuel cell apparatus disclosed in Japanese Laid-Open Patent Publication No. 2008-135271, as shown in FIG. 15, a fuel cell 1c, a reformer 2c for performing steam reforming to supply a fuel gas to the fuel cell 1c, and water supply means X for supplying pure water to the reformer 2c are provided.

In the water supply means X, An activated carbon filter 3c for purifying water, a reverse osmosis membrane 4c for purifying the water, and a water tank 5c for storing the purified water, an ion exchange resin 6c for purifying the water stored in the water tank 5c to pure water, and a water pump 7c for supplying the pure water to the reformer 2c are connected successively toward the reformer 2c.

The fuel cell apparatus includes a heat exchanger 8c for heat-exchange between the exhaust gas from the fuel cell 1c and water, and a hot water tank 9c for storing the water heated by the heat exchange. Condensed water produced by heat exchange between the exhaust gas and water in the heat exchanger 8c is supplied to the water tank 5c**.**

The ion exchange resin 6c is arranged such that water supplied from the water tank 5c flows in a height direction (upward). The water pump 7c is a suction pump, and the water pump 7c is connected to the ion exchange resin 6c such that the water stored in the water tank 5c flows from a lower portion to an upper portion of the ion exchange resin 6c.

Further, in a fuel cell apparatus disclosed in Japanese Laid-Open Patent Publication No. 2008-300058, as shown in FIG. 16, a condensed water tank 1d for storing condensed water produced by heat exchange in the heat exchanger, and a condensed water supply pipe 2d for supplying the condensed water produced by the heat exchanger to the condensed water tank 1d are provided. In the condensed water tank 1d, condensed water processing means (ion exchange resin) 3d for processing the condensed water is provided, and a condensed water drainage pipe 4d for discharging the condensed water is connected to the top of the condensed water supply pipe 2d.

One end of the condensed water supply pipe 2d is connected to a lower end of the condensed water tank 1d. The condensed water supply pipe 2d and the condensed water drainage pipe 4d are connected to each other at a position above the upper limit water level of the condensed water tank 1d.

The fuel cell apparatus has a water processing apparatus Xa for processing water supplied from the outside. The water processed by the water processing apparatus Xa is stored in the water tank 5d. An upper end of the condensed water tank 1d and a side portion of the water tank 5d are connected by a tank coupling pipe 6d.

### Summary of Invention

However, in the above Japanese Laid-Open Patent Publication No. 09-019678 described above, the tank 1a and the water processing apparatus 6a are provided separately, and the tank 1a and the water processing apparatus 6a are connected by the pipe. Therefore, the overall size of the facility is large. Further, the number of components is large, and the facility cost is high.

Further, in Japanese Laid-Open Patent Publication No. 2005-129334, since two independent tanks, i.e., the condensed water tank 1b and the pure water tank 4b, are used, the overall size of the facility is considerably large. Moreover, the number of components is large, and the facility cost is high. Additionally, the condensed water tank 1b, the pure water tank 4b, and the deionizer apparatus 2b are provided separately, and the pure water tank 4b is provided downstream of the deionizer apparatus 2b. Therefore, in particular, in the pure water tank 4b, material from which ions do not transfer to water needs to be used. Therefore, there is restriction on material that can be used for the pure water tank 4b.

Further, in Japanese Laid-Open Patent Publication No. 2008-135271, the water tank 5c and the ion exchange resin 6c are provided separately, and the overall size of the facility is large. Further, the number of components is large, and the facility cost is high.

Further, in Japanese Laid-Open Patent Publication No. 2008-300058, since the condensed water tank 1d and the water tank 5d are present as two independent tanks, the number of components is large, and the facility cost is high.

Moreover, the condensed water processing means 3d is provided in the condensed water tank 1d, and the water tank 5d is provided downstream of the condensed water processing means 3d. In the structure, material from which ions do not transfer to water needs to be used for the water tank 5d. Therefore, there is restriction on material that can be used for the water tank 5d.

The present invention has been made to solve the problems of this type, and an object of the present invention is to provide a fuel cell system having a simple and compact structure in which a desired water processing function is maintained, improvement in the durability is achieved, and the maintenance cycle is extended.

This object is achieved by a fuel cell system having the features of claim 1.

The fuel cell system includes a fuel cell module for generating electrical energy by electrochemical reactions of a fuel gas and an oxygen-containing gas, a water supply apparatus for supplying water to the fuel cell module, a water container for supplying water to the water supply apparatus, and a condenser for condensing water vapor contained in an exhaust gas discharged from the fuel cell module and supplying the condensed water to the water container.

The water container has a supply port for supplying the water from the condenser to the water container, a discharge port for sending the water to the water supply apparatus, and a water channel as a passage of the water from the supply port to the discharge port.

The water channel has an ion exchanger section for removing impurities contained in the water supplied from the condenser, and reversing sections for reversing a flow direction of the water.

The impurities includes dust and other substances that are not contained in the pure water, specifically, salts such as calcium, magnesium, silica, sodium and potassium, water-soluble electrolyte components and organic substances.

According to the present invention, since the water container and the ion exchanger section are formed integrally, it is possible to construct the fuel cell system simply and reduce the overall size of the fuel cell system. Further, since the ion exchanger section is included in the water container, there is no restriction on material that can be used for the water container, and the material can be selected more freely.

Further, the water channel has the ion exchanger section and the reversing sections. Due to the presence of the reversing sections, the ion exchanger section can be elongated. In the structure, the contact time between the water and the ion exchanger section becomes long, and improvement in the water processing function by the ion exchanger section is achieved easily.

In the ion exchanger section, non-uniform flow of the water is suppressed. The entire area of the ion exchanger section can be utilized effectively, and the ion exchanger section can be used effectively over a long period of time. Thus, durability of the ion exchanger section is improved, and the maintenance cycle of the ion exchanger section is extended easily.

The above and other objects, features, and advantages of the present invention will become more apparent from the following description when taken in conjunction with the accompanying drawings in which preferred embodiments of the present invention are shown by way of illustrative example.

### Brief Description of Drawings

FIG. 1 is a diagram schematically showing a structure of a fuel cell system according to a first embodiment of the present invention;
FIG. 2 is a circuit diagram of the fuel cell system;
FIG. 3 is a perspective view schematically showing a water container of the fuel cell system;
FIG. 4 is a cross sectional side view of the water container;
FIG. 5 is a graph showing the relationship between the atmosphere around an anode and the stack temperature;
FIG. 6 is a control map at the time of stopping operation of the fuel cell system;
FIG. 7 is a perspective view schematically showing a water container of a fuel cell system according to a second embodiment of the present invention;
FIG. 8 is a cross sectional side view of the water container;
FIG. 9 is a perspective view schematically showing a water container of a fuel cell system according to a third embodiment of the present Invention;
FIG. 10 is a cross sectional side view of the water container;
FIG. 11 is a perspective view schematically showing a water container of a fuel cell system according to a fourth embodiment of the present invention;
FIG. 12 is a cross sectional side view of the water container;

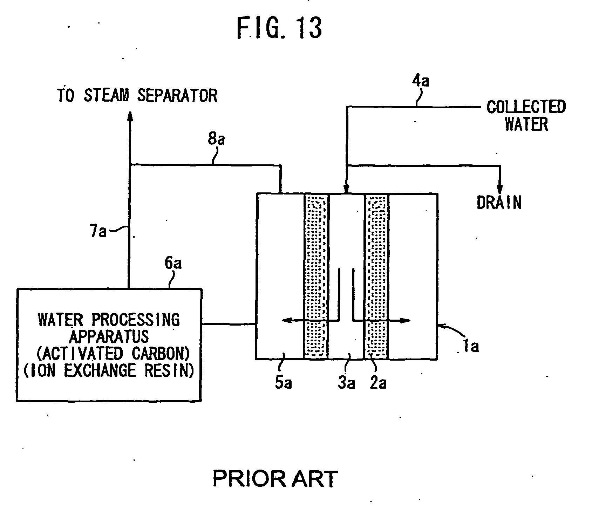

FIG. 13 is a diagram showing a structure of a tank disclosed in Japanese Laid-Open Patent Publication No. 09-019678;

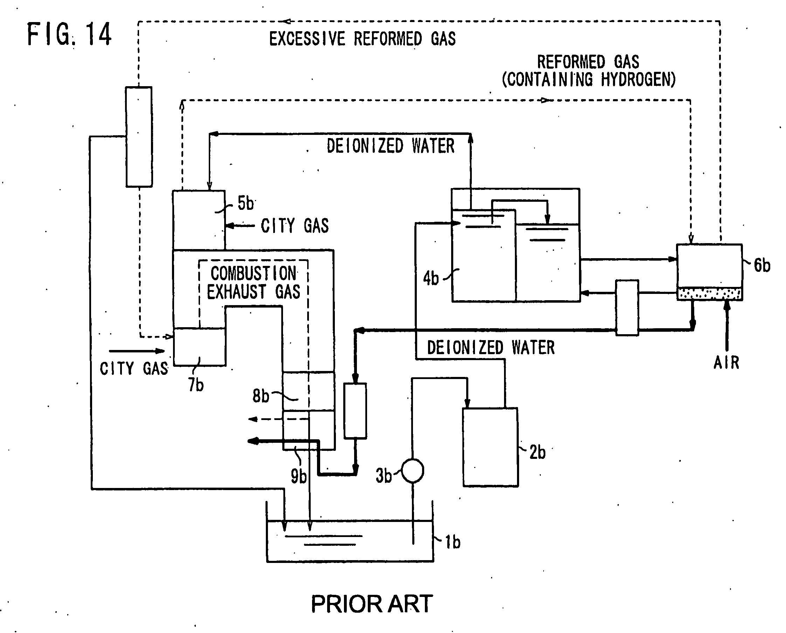

FIG. 14 is a diagram of a water processing apparatus disclosed in Japanese Laid-Open Patent Publication No. 2005-129334;

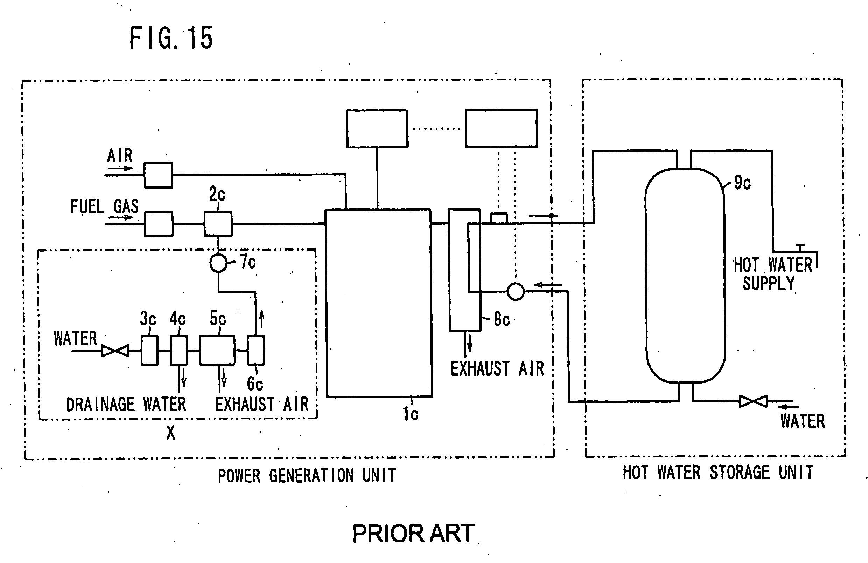

FIG. 15 is a diagram of a fuel cell apparatus disclosed in Japanese Laid-Open Patent Publication No. 2008-135271: and

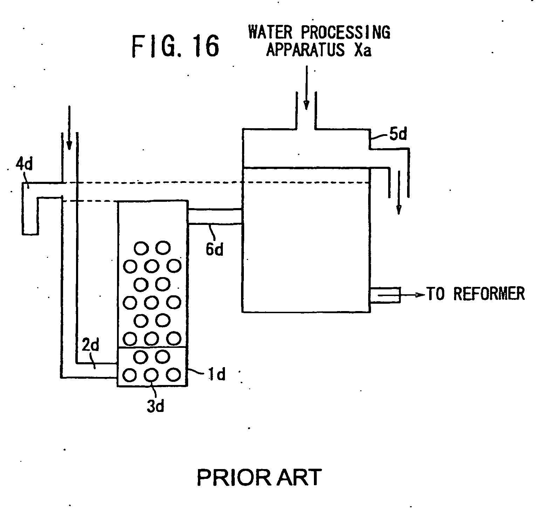

FIG. 16 is a diagram of a fuel cell apparatus disclosed in Japanese Laid-Open Patent Publication No. 2008-300058.

### Description of Embodiments

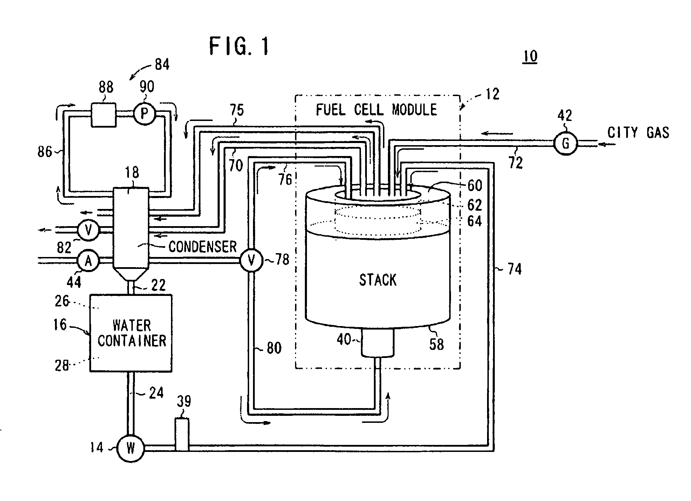

A fuel cell system 10 according to a first embodiment of the present invention as shown schematically in FIG. 1 is used in various applications, e.g., used as a stationary fuel cell system, a vehicle-mounted fuel cell system, or the like.

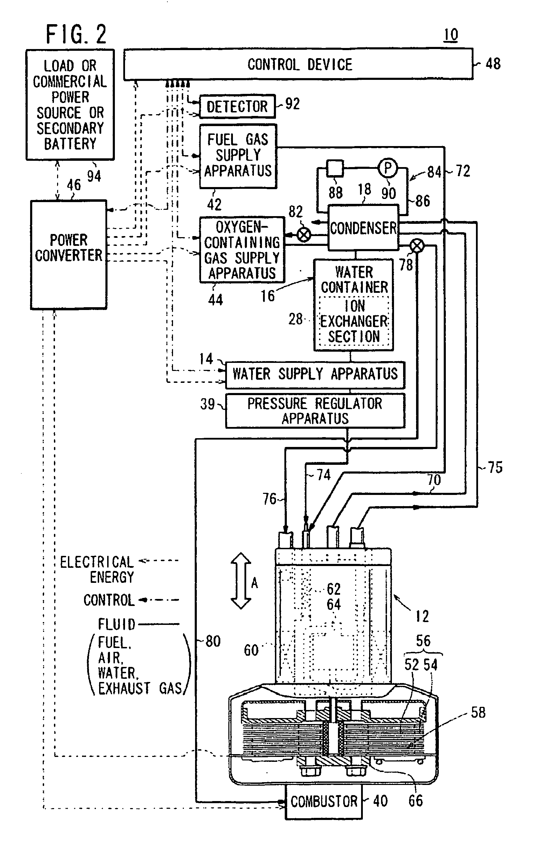

The fuel cell system 10 includes a fuel cell module 12 for generating electrical energy in power generation by electrochemical reactions of a fuel gas (hydrogen gas) and an oxygen-containing gas (air), a water supply apparatus (including a water pump) 14 for supplying water to the fuel cell module 12, a water container 16 for supplying water to the water supply apparatus 14, and a condenser (e.g., heat exchanger) 18 for condensing water vapor in exhaust gas discharged from the fuel cell module 12 and supplying the condensed water to the water container 16 (see FIGS. 1 and 2).

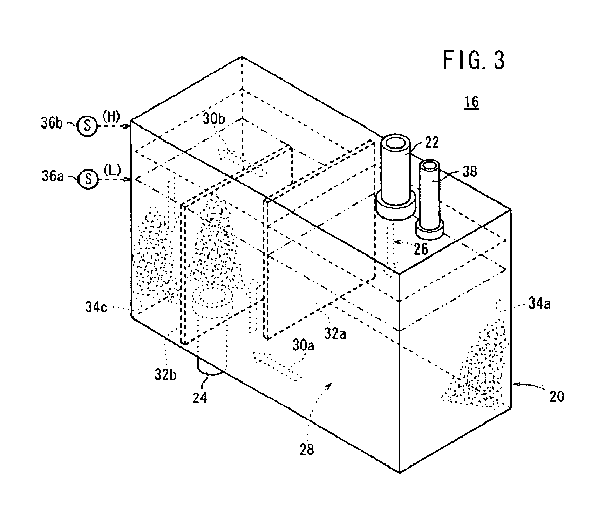

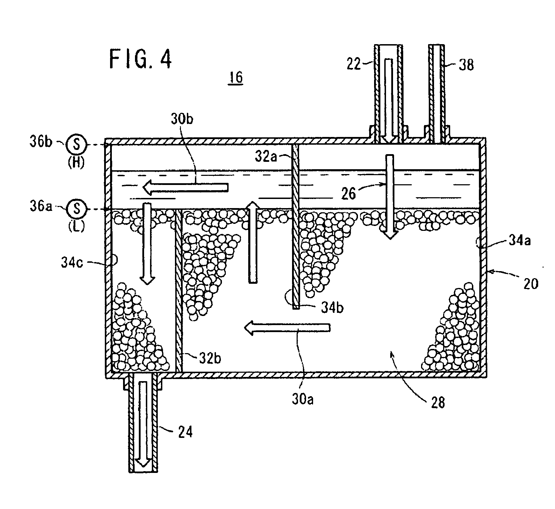

As shown in FIGS. 3 and 4, the water container 16 includes a box-shaped casing 20. The casing 20 has a supply port 22 for supplying water from the condenser 18 to the water container 16, a discharge port 24 for discharging the water from the water container 16 to the water supply apparatus 14, and a water channel 26 as a passage of the water from the supply port 22 to the discharge port 24.

The water channel 26 includes an ion exchanger section 28 for removing impurities contained in the water supplied from the condenser 18, and a first reversing section 30a and a second reversing section 30b for reversing the flow of the water. The supply port 22 is provided at one end (upper side) of the casing 20, and the discharge port 24 is provided at the other end (lower side) of the casing 20. The supply port 22 is provided above the discharge port 24.

Two partition plates 32a, 32b extending in a vertical direction are provided in the casing 20. The first reversing section 30a is formed by cutting out a lower portion of the partition plate 32a, and the second reversing section 30b is formed by cutting out an upper portion of the partition plate 32b.

The water channel 26 has a supply port side water channel section 34a in the upstream of the first reversing section 30a, i.e., in the uppermost stream of the water channel 26. The supply port side water channel section 34a has the largest channel sectional area. An intermediate water channel section 34b is formed downstream of the first reversing section 30a and upstream of the second reversing section 30b. The intermediate water channel section 34b has an intermediate channel cross sectional area. Further, a discharge port side water channel section 34c is formed downstream of the second reversing section 30b. The discharge port side water channel section 34c has the smallest channel cross sectional area. The first reversing section 30a is positioned between the supply port side water channel section 34a and the intermediate water channel section 34b. The second reversing section 30b is positioned between the intermediate water channel section 34b and the discharge port side water channel section 34c. In the structure, the channel cross sectional area of the water channel 26 is decreased stepwise from the upstream side to the downstream side, i.e., from the supply port side water channel section 34a to the intermediate water channel section 34b, and from the intermediate water channel section 34b to the discharge port side water channel section 34c.

The flow direction of the water is vertically reversed, i.e., the water channel 26 has a vertically serpentine pattern. The water channel 26 has an even number of reversing sections, i.e., a first reversing section 30a and a second reversing section 30b. For example, the ion exchanger section 28 is made of granular ion exchange resin. The casing 20 is filled with the ion exchange resin up to a predetermined height position in the casing 20, e.g., up to the upper end position of the partition plate 32b.

The water container 16 has an upper limit water level (H) indicating that the water level in the water container 16 is an upper limit of a suitable range of the water level, and a lower limit water level (L) indicating that the water level in the water container 16 is a lower limit of the suitable range of the water level. The upper limit water level (H) and the lower limit water level (L) are within the second reversing section 30b positioned at the uppermost level in the water container 16. The ion exchanger section 28 is provided below the lower limit water level (L) of the suitable range of the water level.

The water container 16 has a first water level sensor (water level detector) 36a for detecting the lower limit water level (L) and a second water level sensor (water level detector) 36b for detecting the upper limit water level (H). The discharge port side water channel section 34c is configured such that the amount of water stored to the lower level of the suitable range of the water level, i.e., to the lower limit water level (L), is not less than the amount of water required for stopping operation of the fuel cell system 10.

A water drainage pipe 38 is provided at an upper position of the casing 20 for discharging excessive water to the outside of the casing 20 when the water level in the casing 20 exceeds the suitable range of the water level. The water drainage pipe 38 is positioned at the uppermost stream portion of the water container 16, i.e., above the supply port side water channel section 34a and adjacent to the supply port 22.

Impurities in the water supplied to the water container 16 are removed by the ion exchanger section 28 to obtain pure water. The impurities herein includes dust and other substances that are not contained in the pure water, specifically, salts such as calcium, magnesium, silica, sodium, and potassium, water soluble electrolyte and organic components. Further, pure water herein has an electrical conductivity in a range of 0.1 µS/cm to 1.0 µS/cm. In the first embodiment, for example, the pure water has an electrical conductivity of 0.2 µS/cm.

As shown in FIG. 1, a pressure regulator 39 is provided between the water supply apparatus 14 and the fuel cell module 12 for absorbing pulsation of the water supply apparatus 14, and absorbing pressure fluctuations of the fuel cell module 12. Though not shown, an electric conductivity meter and a flow meter are provided between the water container 16 and the water supply apparatus 14, or between the pressure regulator 39 and the fuel cell module 12.

Specifically, as shown in FIG. 2, the fuel cell system 10 includes the fuel cell module 12, a combustor (e.g., torch heater) 40 for raising the temperature of the fuel cell module 12, a fuel gas supply apparatus (including a fuel gas pump) 42 for supplying a raw fuel (e.g., city gas) to the fuel cell module 12, an oxygen-containing gas supply apparatus (including an air pump) 44 for supplying the oxygen-containing gas to the fuel cell module 12, the water supply apparatus 14, the water container 16, the condenser **18,** and a power converter 46 for converting direct current electrical energy generated in the fuel cell module 12 into electrical energy according to the requirements specification, and a control device 48 for controlling the amount of electrical energy generated in the fuel cell module 12.

The fuel cell module 12 includes a fuel cell stack 58 formed by stacking a plurality of solid oxide fuel cells 56 in a vertical direction. The fuel cells 56 are formed by stacking electrolyte electrode assemblies 52 and separators 54. Though not shown, each of the electrolyte electrode assemblies 52 includes a cathode, an anode, and a solid electrolyte (solid oxide) interposed between the cathode and the anode. For example, the electrolyte is made of ionconductive solid oxide such as stabilized zirconia.

At an upper end (or at a lower end) of the fuel cell stack 58 in the stacking direction, a heat exchanger 60 for heating the oxygen-containing gas before it is supplied to the fuel cell stack 58, an evaporator 62 for evaporating water to produce a mixed fuel of the raw fuel and water vapor, and a reformer 64 for reforming the mixed fuel to produce a reformed gas are provided.

At a lower end (or at an upper end) of the fuel cell stack 58 in the stacking direction, a load applying mechanism 66 for applying a tightening load to the fuel cells 56 of the fuel cell stack 58 in the stacking direction indicated by the arrow A is provided. A combustor 40 is provided below the load applying mechanism 66.

The reformer 64 is a preliminary reformer for reforming higher hydrocarbon (C₂₊) such as ethane (C₂H₆), propane (C₃H₈), and butane (C₄H₁₀) in the city gas (fuel gas) into a fuel gas chiefly containing methane (CH₄) by steam reforming. The operating temperature of the reformer 64 is several hundred °C.

The operating temperature of the fuel cell 56 is as high as several hundred °C. In the electrolyte electrode assembly 52, methane in the fuel gas is reformed to obtain hydrogen, and the hydrogen is supplied to the anode.

In the heat exchanger 60, a consumed reactant gas discharged from the fuel cell stack 58 (hereinafter also referred to as the exhaust gas or the combustion exhaust gas) and the air as a fluid to be heated flow in a counterflow manner for heat exchange. The exhaust gas after heat exchange is discharged to an exhaust pipe 70, and the air after heat exchange is supplied to the fuel cell stack 58 as an oxygen-containing gas.

A dual pipe is connected to the evaporator 62, and a raw fuel channel 72 and a water channel (water pipe) 74 are formed in the dual pipe. The outlet of the evaporator 62 is connected to the inlet of the reformer 64. The outlet of the reformer 64 is connected to a fuel gas supply passage (not shown) extending through the fuel cell stack 58. A main exhaust pipe 75 is provided for discharging the exhaust gas supplied to the evaporator 62.

The fuel gas supply apparatus 42 is connected to the raw fuel channel 72. The oxygen-containing gas supply apparatus 44 is connected to the air supply pipe 76. A switching valve 78 is provided in a middle of the air supply pipe 76. The switching valve 78 is connected to the air branch channel 80, and the air branch channel 80 is connected to the combustor 40. For example, the combustor 40 includes a torch heater, and the air and electrical current are supplied to the combustor 40.

The exhaust pipe 70 and the main exhaust pipe 75 are connected to the condenser 18. A flow rate regulator valve 82 is provided in the exhaust pipe 70, at the outlet of the condenser 18, for regulating the flow rate of the exhaust gas supplied to the reformer 64. As the flow rate regulator valve 82, an open/close valve, or a throttle valve having an adjustable opening is adopted.

A hot water mechanism 84 is connected to the condenser 18. The hot water mechanism 84 has a water circulation channel 86 for circulating water (coolant medium) heated using the exhaust gas supplied to the exhaust pipe 70 and/or the main exhaust pipe 75 as the heat medium. A hot water tank 88 and a pump 90 are provided in the water circulation channel 86.

The fuel gas supply apparatus 42, the oxygen-containing gas supply apparatus 44, and the water supply apparatus 14 are controlled by the control device 48. A detector 92 for detecting the fuel gas is electrically connected to the control device 48. For example, a commercial power source 94 (or load, secondary battery, or the like) is connected to the power converter 46.

Operation of the fuel cell system 10 will be described below.

As shown in FIG. 2, by operation of the fuel gas supply apparatus 42, for example, a raw fuel such as the city gas (including CH₄, C₂H₆, C₃H₈, C₄H₁₀) is supplied to the raw fuel channel 72. Further, by operation of the water supply apparatus 14, water is supplied to the water channel 74, and the oxygen-containing gas such as the air is supplied to the air supply pipe 76 through the oxygen-containing gas supply apparatus 44.

In the evaporator 62, the raw fuel flowing through the raw fuel channel 72 is mixed with the water vapor, and a mixed fuel is obtained. The mixed fuel is supplied to the inlet of the reformer 64. The mixed fuel undergoes steam reforming in the reformer 64. Thus, hydrocarbon of C₂₊ is removed (reformed), and a reformed gas chiefly containing methane is obtained. The reformed gas flows through the outlet of the reformer 64, and the reformed gas is supplied to the fuel cell stack 58. Thus, the methane in the reformed gas is reformed, and the hydrogen gas is obtained. The fuel gas chiefly containing the hydrogen gas is supplied to the anode (not shown).

When the air supplied from the air supply pipe 76 to the heat exchanger 60 moves through the heat exchanger 60, the air is heated to a predetermined temperature by heat exchange with the exhaust gas as described later. The air heated by the heat exchanger 60 flows into the fuel cell stack 58, and the air is supplied to the cathode (not shown).

Thus, in the electrolyte electrode assembly 52, by electrochemical reactions of the fuel gas and the air, power generation is performed. When the hot exhaust gas (several hundred °C) discharged to the outer circumferential region of each of the electrolyte electrode assemblies 52 flows through the heat exchanger 60, heat exchange with the air is carried out. The air is heated to the predetermined temperature, and the temperature of the exhaust gas is decreased.

This exhaust gas evaporates the water passing through the water channel 74. After the exhaust gas passes through the evaporator 62, the exhaust gas is sent to the condenser 18 through the main exhaust pipe 75, and the water vapor is condensed. The exhaust gas components are discharged to the outside. In the hot water mechanism 84, when the demand for the hot water is small, the pump 90 is stopped. The oxygen-containing gas supplied to the condenser 18 may be heated by this hot water.

In the condenser 18. the water vapor is condensed to produce water, and the water flows into the water container 16 provided downstream of the condenser 18. Since the ion exchanger section 28 is provided in the water container 16. impurities contained in the water supplied into the water container 16 are removed at the ion exchanger section 28.

Further, by operation of the water supply apparatus 14 provided downstream of the water container 16, the water stored in the water container 16 is supplied into the pressure regulator 39. After the pressure of the water is regulated, the water is supplied into the fuel cell module 12 through the water channel 74.

In the first embodiment, as shown in FIGS. 3 and 4, the water container 16 has the supply port 22 for supplying the water from the condenser 18 to the water container 16, the discharge port 24 for sending the water to the water supply apparatus 14, and the water channel 26 as a passage of the water from the supply port 22 to the discharge port 24. The water channel 26 has the ion exchanger section 28 for removing impurities contained in the water supplied from the condenser 18, and the first reversing section 30a and the second reversing section 30b for reversing the flow direction of the water.

In the structure, the water container 16 and the ion exchanger section 28 are formed integrally. Therefore, it is possible to construct the fuel cell system 10 simply and reduce the overall size of the fuel cell system 10. Further, since the ion exchanger section 28 is provided in the water container 16, there is no restriction on the material that can be used for the water container 16, i.e., the casing 20. Therefore, the material can be selected more freely.

Further, the water channel 26 has the ion exchanger section 28, the first reversing section 30a, and second reversing section 30b. In the presence of the first reversing section 30a and the second reversing section 30b, the ion exchanger section 28 can be elongated. In the structure, the contact time between the water and the ion exchanger section 28 becomes long, and improvement in the water processing function by the ion exchanger section 28 is achieved easily.

Further, in the ion exchanger section 28, non-uniform flow of the water is suppressed. Accordingly, the entire area of the ion exchanger section 28 can be utilized effectively, and the ion exchanger section 28 can be used effectively over a long period of time. Thus, durability of the ion exchanger section 28 is improved, and the maintenance cycle of the ion exchanger section 28 is extended easily.

Further, the supply port 22 is provided at the upper portion of the casing 20, and the discharge port 24 is provided at the lower portion of the casing 20. The supply port 22 is provided above the discharge port 24. Thus, the water is supplied from the water container 16 to the water supply apparatus 14 provided downstream of the water container 16 by the hydraulic head pressure. In this manner, formation of air bubbles (air bubble entrainment) in the water supply apparatus 14 is prevented as much as possible. Accordingly, it becomes possible to effectively avoid degradation of the performance of the water supply apparatus 14, unwanted mixing of the air into the reformer 64, carbon deposition (coking) to the electrodes, and instability of the power generation output of the fuel cell module 12.

Further, the ion exchanger section 28 of the water container 16 is provided upstream of the water supply apparatus 14. Therefore, high pressure (water pressure) by the water supply apparatus 14 is not applied to the ion exchanger section 28, and improvement in the durability of the ion exchanger section 28 is achieved.

Further, the water channel 26 includes the supply port side water channel section 34a, the intermediate water channel section 34b, and the discharge port side water channel section 34c along the flow direction. The channel cross sectional area is decreased from the supply port side water channel section 34a to the intermediate water channel section 34b, and from the intermediate water channel section 34b to the discharge port side water channel section 34c. Thus, depending on the load, the area where ion exchange is mainly carried out is changed.

In the structure, ion exchange can be carried out over a wide operation range from partial load operation to rated operation, and ion exchange is carried out uniformly over the entire ion exchanger section 28. Thus, improvement in the durability of the ion exchanger section 28 is achieved.

Further, the entire area of the ion exchanger section 28 can be utilized effectively, and the ion exchanger section 28 can be used over a long period of time. Thus. durability of the ion exchanger section 28 is improved, and the maintenance cycle of the ion exchanger section 28 is extended easily.

Further, in the water channel 26, the first reversing section 30a is provided between the intermediate water channel section 34b and the supply port side water channel section 34a, and the channel cross sectional area of the intermediate water channel section 34b on the downstream side is smaller than the channel cross sectional area of the supply port side water channel section 34a on the upstream side. The second reversing section 30b is provided between the discharge port side water channel section 34c and the intermediate water channel section 34b, and the channel cross sectional area of the discharge port side water channel section 34c on the downstream side is smaller than the channel cross sectional area of the intermediate water channel section 34b on the upstream aide. Thus, the channel cross sectional areas of the supply port side water channel section 34a, the intermediate water channel section 34b, and the discharge port side water channel section 34c are decreased stepwise from the upstream side to the downstream side.

Thus, depending on the load, the area where ion exchange is mainly carried out is changed. In the structure, ion exchange can be carried out over a wide operation range from partial load operation to rated operation, and ion exchange is carried out uniformly over the entire ion exchanger section 28. Thus, improvement in the durability of the ion exchanger section 28 is achieved.

Further, the entire area of the ion exchanger section 28 can be utilized effectively, and the ion exchanger section 28 can be used over a long period of time. Thus, durability of the ion exchanger section 28 is improved, and the maintenance cycle of the ion exchanger section 28 is extended easily.

The water container 16 has an upper limit water level (H) indicating that the water level in the water container 16 is an upper limit of a suitable range of the water level, and a lower limit water level (L) indicating that the water level in the water container 16 is a lower limit of the suitable range of the water level. The upper limit water level (H) and the lower limit water level (L) are within the second reversing section 30b positioned at the uppermost level in the water container 16.

Thus, in the case of switching from partial load operation to rated operation, i.e., even in the case where a large amount of water is required, e.g., at the time of increasing the load of the fuel cell system 10, water can be supplied stably to the fuel cell module 12. Therefore, it becomes possible to effectively avoid shortage of water vapor supplied to the reformer 64, carbon deposition (coking) to the electrodes, and instability of the power generation output of the fuel cell module 12.

Further, the ion exchanger section 28 is provided below the suitable range of the water level, i.e., below the lower limit water level (L). Therefore, the ion exchanger section 28 is immersed in the water all the time. It becomes possible to prevent the ion exchanger section 28 from being dried. As a result, degradation of the ion exchange resin of the ion exchanger section 28 is suppressed, and improvement in the durability is achieved.

Further, in the water container 16, the first water level sensor 36a and the second water level sensor 36b are provided as the water level detectors for detecting the water level in the water container 16. The first water level sensor 36a and the second water level sensor 36b are provided above the ion exchanger section 28.

Thus, in particular, the first water level sensor 36a for detecting the lower limit water level (L) is not affected by capillary action of the ion exchanger section 28, and can accurately measure the water level in the water container 16. Therefore, economical, i.e., low cost sensors can be used as the water level sensor 36a and the second water level sensor 36b.

Further, the water drainage pipe 38 is provided in the water container 16 for discharging excessive water to the outside of the water container 16 when the water level in the water container 16 exceeds the suitable range of the water level. The water drainage pipe 38 is positioned at the upper portion of the water container 16. In the structure, the water that has exceeded the suitable range of the water level does not flow toward the upstream side of the water container 16, i.e., does not flow back to the supply port 22. Thus, operation of the fuel cell system 10 is performed stably.

Further, the water drainage pipe 38 is provided at the uppermost stream portion of the water container 16, i.e., above the supply port side water channel section 34a. Therefore, the water that has exceeded the suitable range of the water level does not flow toward the upstream side of the water container 16, i.e., does not flow back to the supply port 22. Thus, operation of the fuel cell system 10 is performed stably. Additionally, in particular, it is possible to suppress the processed water from being discharged from the water drainage pipe 38 to the outside as much as possible, and the ion exchanger section 28 can be used suitably over a long period of time. Thus, durability of the ion exchanger section 28 is improved, and the maintenance cycle of the ion exchanger section 28 is extended easily.

Further, the water channel 26 has an even number of reversing sections, e.g., the first reversing section 30a and the second reversing section 30b, to reverse the flow direction of the water. The flow direction of the water is vertically reversed in water channel 26, i.e., the water channel 26 has a vertically serpentine pattern. In the structure, in the water channel 26, the water is supplied from the water container 16 to the water supply apparatus 14 provided downstream of the water container 16 by the hydraulic head pressure.

Thus, in the water supply apparatus 14, formation of air bubbles (air bubble entrainment) in the water supply apparatus 14 is prevented as much as possible. Accordingly, it becomes possible to effectively avoid degradation of the performance of the water supply apparatus 14, unwanted mixing of the air into the reformer 64, carbon deposition (coking) to the electrodes, and instability of the power generation output of the fuel cell module 12. Further, the ion exchanger section 28 of the water container 16 is provided upstream of the water supply apparatus 14. Therefore, high pressure (water pressure) by the water supply apparatus 14 is not applied to the ion exchanger section 28, and thus improvement in the durability of the ion exchanger section 28 is achieved.

The discharge port side water channel section 34c is configured such that the amount of water stored to the lower level of the suitable range of the water level, i.e., to the lower limit water level (L), is not less than the amount of water required for stopping operation of the fuel cell system 10. Therefore, even in the case of stopping operation of the fuel cell system 10 emergently, water is supplied stably to the fuel cell module 12. Accordingly, it becomes possible to effectively avoid shortage of water vapor in the reformer 64, and carbon deposition (coking) to the electrodes.

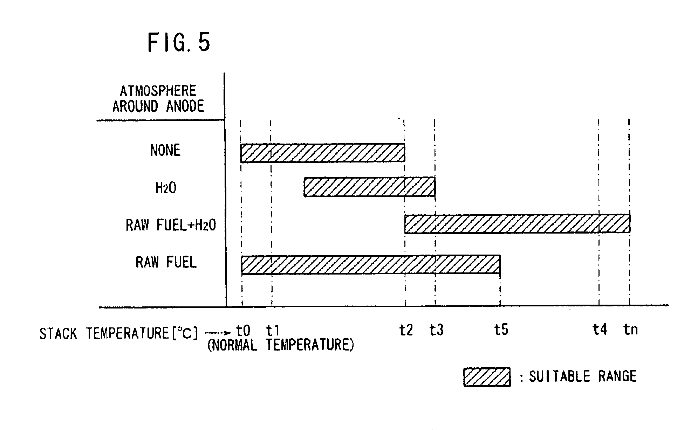

Specifically, the temperature of the fuel cell stack 58 of the fuel cell system 10 (hereinafter also referred to as the stack temperature) and the atmosphere around the anode has the relationship as shown in FIG. 5. More specifically, in the state where the anode is exposed to the oxygen atmosphere (see NONE in FIG. 5), if the stack temperature exceeds t2 °C, (e.g., 300°C), oxidization of the anode occurs easily. Further, in the state where the anode is exposed to the water vapor atmosphere, if the stack temperature exceeds t3 °C (e.g., 350°C), steam oxidization of the anode occurs easily.

In the state where the anode is exposed to the raw fuel atmosphere, if the stack temperature exceeds t5 °C (e.g., 500°C), coking may occur undesirably. In the state where the anode is exposed to the mixed fuel of the raw fuel and the water vapor, if the stack temperature becomes t2 °C or less, operation of the evaporator 62 becomes unstable, and the S/C (molar ratio) becomes low. Thus, coking may occur, and water condensation may occur in the electrolyte electrode assembly 52, and degradation of the electrolyte electrode assembly 52 may occur undesirably.

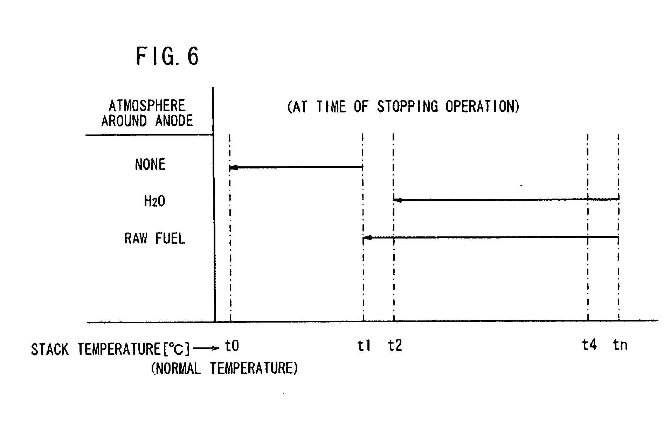

In order to avoid such circumstances, when operation of the fuel cell system 10 is stopped, the amount of the supplied raw fuel is decreased to set the S/C to be not less than 4 (see temperature t4 °C in FIG. 6). Thus, when the stack temperature is t2 °C or less, the supply of water from the water supply apparatus 14 is stopped, and only the raw fuel is supplied.

Then, short-time purging only using the raw fuel is performed down to the temperature tl °C (or for a certain period of time, or momentarily), and the water remaining in the fuel line is discharged to the outside. Thereafter, no water or raw fuel is supplied to the anode, and the stack temperature is lowered to a formal temperature. In this manner, the process of stopping operation of the fuel cell system 10 is finished.

In the first embodiment, at least the amount of water used by the process of stopping operation of this type is maintained in the discharge port side water channel section 34c of the water container 16. Therefore, it is possible to stably stop operation of the fuel cell system 10.

Further, the fuel cell module 12 includes the fuel cell stack 58, the heat exchanger 60, the evaporator 62, and the reformer 64. In particular, this structure is optimally applicable to the fuel cell module 12 that performs steam reforming, and advantageous effects are obtained.

The fuel cell module 12 comprises a high temperature fuel cell system, e.g., made up of a solid oxide fuel cell (SOFC) module to achieve the desired advantages. Instead of the solid oxide fuel cell module, the present invention is suitably applicable to other high temperature type fuel cell modules or medium temperature type fuel cell modules. For example, molten carbonate fuel cells (MCFC), phosphoric acid fuel cells (PAFC), hydrogen membrane fuel cells (HMFC) or the like may be adopted suitably.

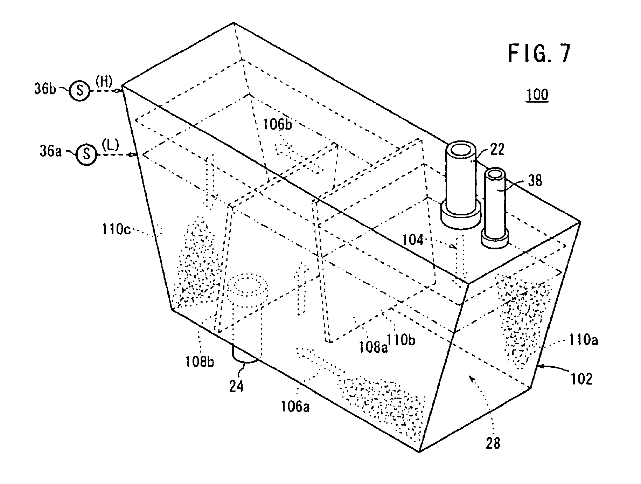

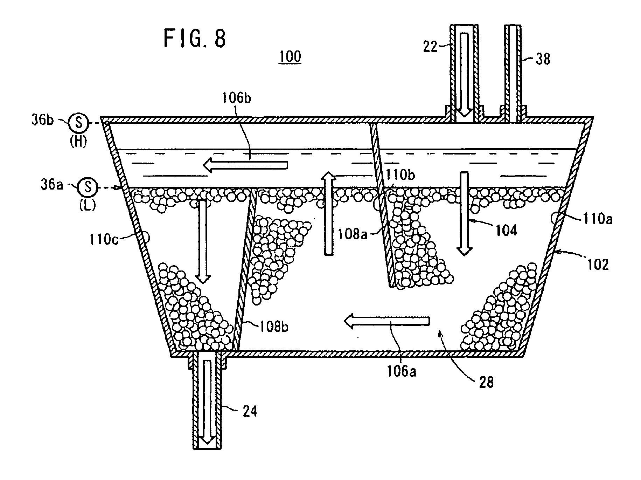

FIG. 7 is a perspective view schematically showing a water container 100 of a fuel cell system according to a second embodiment of the present invention. FIG. 8 is a cross sectional side view showing the water container 100. The constituent elements that are identical to those of the fuel cell system 10 according to the first embodiment are labeled with the same reference numerals, and description thereof will be omitted. Also in third and other embodiments as described later, the constituent elements that are identical to those of the water container 16 of the fuel cell system 10 according to the first embodiment are labeled with the same reference numerals, and detailed description thereof will be omitted.

The water container 100 has a casing 102 having a substantially trapezoidal shape as viewed from the front side. At one end (upper side) of the casing 102 on the longer side, a supply port 22 and a water drainage pipe 38 are provided, and at the other end (lower side) of the casing 102 on the shorter side, a discharge port 24 is provided.

The casing 102 has a water channel 104 as a passage of water from the supply port 22 to the discharge port 24. The water channel 104 has an ion exchanger section 28, a first reversing section 106a, and a second reversing section 106b.

Partition plates 108a, 108b are provided in the casing 102. The partition plates 108a. 108b are inclined toward predetermined directions from a vertical direction. The first reversing section 106a is formed by cutting out the lower portion of the partition plate 108a, and the second reversing section 106b is formed by cutting out the upper portion of the partition plate 108b.

In the casing 102, a supply port side water channel section 110a, an intermediate water channel section 110b, and a discharge port side water channel section 110c are formed by the partition plates 108a, 108b. The supply port side water channel section 110a has the largest channel cross sectional area, the intermediate water channel section 110b has an intermediate channel cross sectional area, and the discharge port side water channel section 110c has the smallest channel cross sectional area. The channel cross sectional areas of the supply port side water channel section 110a, the intermediate water channel section 110b, and the discharge port side water channel section 110c of the water channel 104 are decreased continuously from the upstream side to the downstream side. The discharge port side water channel section 110c is configured such that the amount of water stored to the lower level of the suitable range of the water level, i.e., to the lower limit water level (L), is not less than the amount of water required for stopping operation of the fuel cell system.

In the second embodiment, the water container 100 has the water channel 104 as a passage of the water from the supply port 22 to the discharge port 24. The water channel 104 has an even number of, e.g., two reversing sections including the first reversing section 106a and the second reversing section 106b. For example, the water channel 104 has the supply port side water channel section 110a, the intermediate water channel section 110b, and the discharge port side water channel section 110c. The channel cross sectional areas of the supply port side water channel section 110a, the intermediate water channel section 110b, and the discharge port side water channel section 110c of the water channel 104 are decreased continuously from the upstream side to the downstream side. Thus, in the second embodiment, the same advantageous effects as in the case of the first embodiment are obtained.

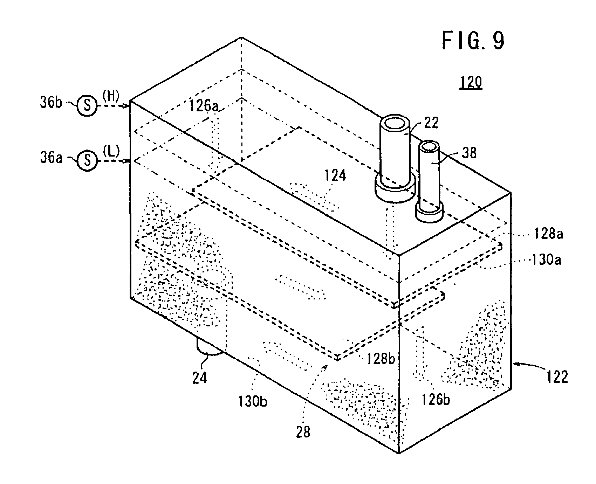

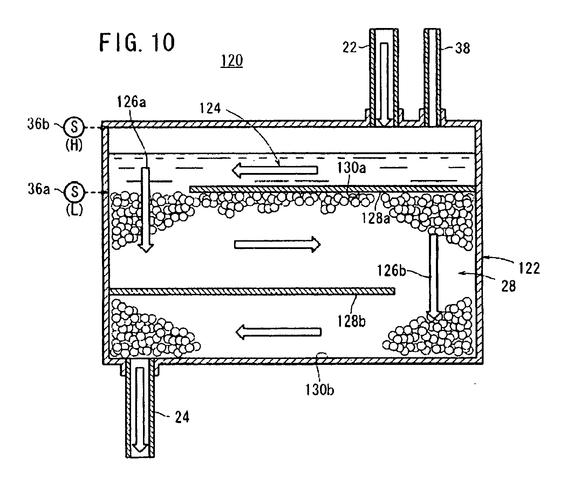

FIG. 9 is a perspective view schematically showing a water container 120 according to a third embodiment of the present invention. FIG. 10 is a cross sectional side view showing the water container 120.

The water container 120 has a box-shaped casing 122. A supply port 22 and a water drainage pipe 38 are provided at one end (upper side) of the casing 122, and a discharge port 24 is provided at the other end (lower side) of the casing 122.

In the casing 122, a water channel 124 as a passage of the water from the supply port 22 to the discharge port 24 is provided. The water channel 124 includes an ion exchanger section 28, a first reversing section 126a, and a second reversing section 126b.

Partition plates 128a, 128b extending horizontally from both sides are provided in the casing 122. The first reversing section 126a is formed by cutting out an end of the partition plate 128a, and the second reversing section 126b is formed by cutting out an end of the partition plate 128b.

The water channel 124 forms a flow passage where the flow direction of the water is reversed left and right, i.e., in a laterally serpentine pattern, and the water flows in a vertical direction. In the casing 122, a supply port side water channel section 130a is formed on the upper side (on the upstream side) and a discharge port side water channel section 130b is formed on the lower side (on the downstream side), by the partition plate 128a and the partition plate 128b. The channel cross sectional area of the discharge port side water channel section 130b on the downstream side is smaller than the channel cross sectional area of the supply port side water channel section 130a on the upstream side. That is, the channel cross sectional area of the water channel 124 is decreased stepwise from the upstream side to the downstream side.

In the third embodiment, the water container 120 has the water channel 124 having a laterally serpentine pattern, and the ion exchanger section 28 immersed in water all the time is provided in the water channel 124. Therefore, the same advantageous effects as in the cases of the first and second embodiments are obtained.

In the third embodiment, since the water channel 124 is reversed left and right in a serpentine pattern, the number of turns is not limited to the even number. The number of turns may be an odd number. Further, the water capacity of the discharge port side water channel section 130b may be equal to or less than the amount of water required for stopping operation of the fuel cell system 10. That is, the water stored in the supply port side water channel section 130a can be supplied to the water supply apparatus 14 by its own weight, since the water supply apparatus 14 is positioned downstream of the supply port side water channel section 130a.

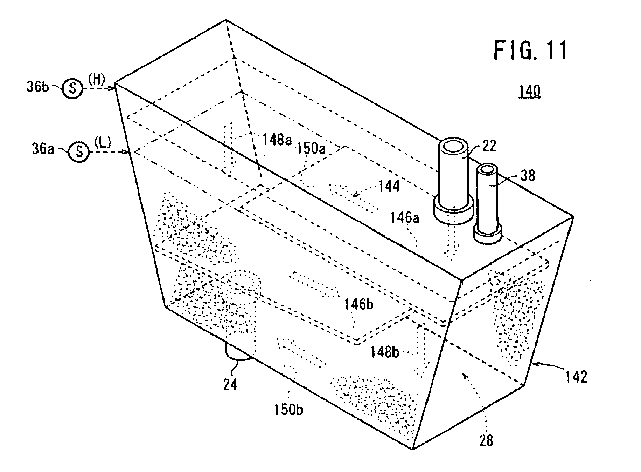

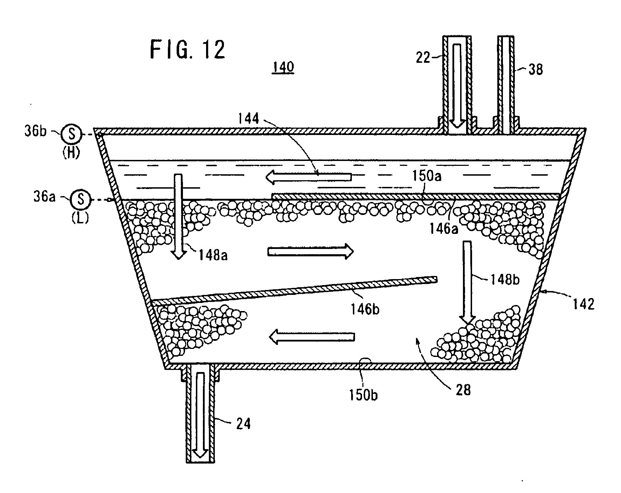

FIG. 11 is a perspective view schematically showing a water container 140 of a fuel cell system according to a fourth embodiments of the present invention. FIG. 12 is a cross sectional side view showing the water container 140.

The water container 140 includes a casing 142 having a trapezoidal shape as viewed from the front side. At one end (upper side) of the casing 142 on the longer side, a supply port 22 and a water drainage pipe 38 are provided, and at the other end (lower side) of the casing 142 on the shorter side, a discharge port 24 is provided.

The casing 142 has a water channel 104 as a passage of water from the supply port 22 to the discharge port 24. The water channel 144 is reversed left and right in a serpentine pattern, i.e., has a laterally serpentine pattern. Specifically, partition plates 146a, 146b extend from the opposite inclined side surfaces of the casing 142. The first reversing section 148a is formed by cutting out an end of the partition plate 146a, and the second reversing section 148b is formed by cutting out an end of the partition plate 146b.

In the casing 142, the supply port side water channel section 150a and the discharge port side water channel section 150b are formed by the partition plates 146a, 146b, and the channel cross sectional area of the discharge port side water channel section 150b on the downstream side is smaller than the channel cross sectional area of the supply port side water channel section 150a on the upstream side. That is, the channel cross sectional area of the water channel 144 is decreased continuously from the upstream side to the downstream side.

In the fourth embodiment, the flow passage of the water channel 144 in the casing 142 has a laterally serpentine pattern. Therefore, the same advantageous effects as in the cases of the first to third embodiments are obtained.

Although certain preferred embodiments of the present invention have been shown and described in detail, it should be understood that various changes and modifications may be made therein without departing from the scope of the appended claims.

## Claims

1. A fuel cell system comprising:
a fuel cell module (12) for generating electrical energy by electrochemical reactions of a fuel gas and an oxygen-containing gas;
a water supply apparatus (14) for supplying water to the fuel cell module (12);
a water container (16) for supplying water to the water supply apparatus (14);
and
a condenser (18) for condensing water vapor contained in an exhaust gas discharged from the fuel cell module (12), and supplying the condensed water to the water container (16),
wherein the water container (16) has a supply port (22) for supplying the water from the condenser (18) to the water container (16), a discharge port (24) for sending the water to the water supply apparatus (14), and a water channel (26) as a passage of the water from the supply port (22) to the discharge port (24); and
the water channel (26) has an ion exchanger section (28) for removing impurities contained in the water supplied from the condenser (18), and reversing sections (30a) for reversing a flow direction of the water,
**characterized in that**
the water container (16) has a water drainage pipe (38) for discharging excessive water from the water container (16) when the water level in the water container (16) exceeds a suitable range of the water level; and
the water drainage pipe (38) and the supply port (22) are provided adjacent to each other at an uppermost stream portion of the water container (16) above a supply port side water channel section (34a) of the water channel (26).

2. A fuel cell system according to claim 1, wherein the supply port (22) is provided above the discharge port (24).

3. A fuel cell system according to claim 1, wherein the channel cross sectional area on the downstream side of the water channel (26) is smaller than the channel cross sectional area on the upstream side of the water channel (26).

4. A fuel cell system according to any one of claims 1 to 3, wherein any of the reversing sections (30a) is provided between the upstream side and the downstream side of the water channel (26), and the channel cross sectional area on the downstream side of the water channel (26) is smaller than the channel cross sectional area on the upstream side of the water channel (26).

5. A fuel cell system according to claim 1, wherein the channel cross sectional area of the water channel (26, 104) is decreased stepwise or continuously from the upstream side to the downstream side.

6. A fuel cell system according to claim 1, wherein the water container (16) has an upper limit water level indicating that the water level in the water container (16) is an upper limit of a suitable range of the water level, and a lower limit water level indicating that the water level in the water container (16) is a lower limit of the suitable range of the water level; and
the upper limit water level and the lower limit water level are within the reversing section (30b) positioned at the uppermost portion in the water container (16).

7. A fuel cell system according to claim 1, wherein the ion exchanger section (28) is provided below a suitable range of the water level.

8. A fuel cell system according to claim 1, wherein the water container (16) has a water level detector (36b) for detecting the water level in the water container (16), and the water level detector (36b) is provided above the ion exchanger section (28).

9. A fuel cell system according to claim 1, wherein the water channel (26) has an even number of the reversing sections (30a, 30b) for reversing the flow direction of the water vertically.

10. A fuel cell system according to claim 9, wherein the water container (16) has a discharge port side water channel section (34c) downstream of the reversing section (30b) at the lowermost stream portion of the water channel (26); and
the discharge port side water channel section (34c) is configured such that the amount of water stored to a lower level of a suitable range of the water level is not less than the amount of water required for stopping operation of the fuel cell system (10).

11. A fuel cell system according to claim 1, wherein the water channel (124) includes a plurality of the reversing sections (126a, 126b) for reversing the flow direction of the water laterally.

12. A fuel cell system according to claim 1, wherein the fuel cell module (12) comprises:
a fuel cell stack (58) formed by stacking a plurality of fuel cells (56), the fuel cells (56) each formed by stacking at least an electrolyte electrode assembly (52) and a separator (54), the electrolyte electrode assembly (52) including an anode, a cathode, and an electrolyte interposed between the anode and the cathode;
a heat exchanger (60) for heating the oxygen-containing gas before the oxygen-containing gas is supplied to the fuel cell stack (58);
an evaporator (62) for evaporating the water in order to produce a mixed fuel of raw fuel chiefly containing hydrocarbon and water vapor; and
a reformer (64) for reforming the mixed fuel to produce a reformed gas.

13. A fuel cell system according to claim 1, wherein the fuel cell module (12) is a solid oxide fuel cell module.

## Patentansprüche

1. Brennstoffzellensystem, umfassend:
ein Brennstoffzellenmodul (12) zur Erzeugung von elektrischer Energie durch elektrochemische Reaktionen von einem Brenngas und einem Sauerstoff-haltigen Gas;
eine Wasser-Zufuhreinrichtung (14), um dem Brennstoffzellenmodul (12) Wasser zuzuführen;
einen Wasserbehälter (16), um der Wasser-Zufuhreinrichtung (14) Wasser zuzuführen; und
einen Kondensator (18), um in einem von dem Brennstoffzellenmodul (12) abgegebenen Abgas enthaltenen Wasserdampf zu kondensieren und das kondensierte Wasser dem Wasserbehälter (16) zuzuführen,
wobei der Wasserbehälter (16) eine Zufuhröffnung (22) hat, um das Wasser von dem Kondensator (18) dem Wasserbehälter (16) zuzuführen, eine Abgabeöffnung (24) hat, um das Wasser zu der Wasser-Zufuhreinrichtung (14) zu leiten, und einen Wasserkanal (26) als einen Durchgang von dem Wasser von der Zufuhröffnung (22) zu der Abgabeöffnung (24) hat; und
der Wasserkanal (26) einen Ionenaustauscher-Abschnitt (28) hat, um in dem von dem Kondensator (18) zugeführten Wasser enthaltene Verunreinigungen zu entfernen, und Umkehrabschnitte (30a) hat, um eine Strömungsrichtung des Wassers umzukehren,
**dadurch gekennzeichnet, dass**
der Wasserbehälter (16) ein Wasser-Ableitungsrohr (38) hat, um überschüssiges Wasser von dem Wasserbehälter (16) abzugeben, wenn der Wasser-Füllstand in dem Wasserbehälter (16) einen geeigneten Bereich von dem Wasser-Füllstand übersteigt; und
das Wasser-Ableitungsrohr (38) und die Zufuhröffnung (22) benachbart zueinander an einem obersten Strömungsabschnitt von dem Wasserbehälter (16) oberhalb eines Zufuhröffnung-seitigen Wasserkanalabschnitts (34a) von dem Wasserkanal (26) vorgesehen sind.

2. Brennstoffzellensystem nach Anspruch 1, wobei die Zufuhröffnung (22) oberhalb der Abgabeöffnung (24) vorgesehen ist.

3. Brennstoffzellensystem nach Anspruch 1, wobei die Kanal-Querschnittsfläche auf der stromabwärtigen Seite von dem Wasserkanal (26) kleiner ist als die Kanal-Querschnittsfläche auf der stromaufwärtigen Seite von dem Wasserkanal (26).

4. Brennstoffzellensystem nach einem der Ansprüche 1 bis 3, wobei jeder von den Umkehrabschnitten (30a) zwischen der stromaufwärtigen Seite und der stromabwärtigen Seite von dem Wasserkanal (26) vorgesehen ist, und die Kanal-Querschnittsfläche auf der stromabwärtigen Seite von dem Wasserkanal (26) kleiner ist als die Kanal-Querschnittsfläche auf der stromaufwärtigen Seite von dem Wasserkanal (26).

5. Brennstoffzellensystem nach Anspruch 1, wobei die Kanal-Querschnittsfläche von dem Wasserkanal (26, 104) von der stromaufwärtigen Seite zu der stromabwärtigen Seite schrittweise oder kontinuierlich verringert wird.

6. Brennstoffzellensystem nach Anspruch 1, wobei der Wasserbehälter (16) eine obere Wasser-Füllstand-Grenze hat, welche anzeigt, dass der Wasser-Füllstand in dem Wasserbehälter (16) eine obere Grenze von einem geeigneten Bereich von dem Wasser-Füllstand ist, und eine untere Wasser-Füllstand-Grenze hat, welche an gibt, dass der Wasser-Füllstand in dem Wasserbehälter (16) eine untere Grenze von dem geeigneten Bereich von dem Wasser-Füllstand ist; und
sich die obere Wasser-Füllstand-Grenze und die untere Wasser-Füllstand-Grenze innerhalb des an dem obersten Abschnitt in dem Wasserbehälter (16) angeordneten Umkehrabschnitt (30b) befinden.

7. Brennstoffzellensystem nach Anspruch 1, wobei der Ionenaustauscher-Abschnitt (28) unter einem geeigneten Bereich von dem Wasser-Füllstand vorgesehen ist.

8. Brennstoffzellensystem nach Anspruch 1, wobei der Wasserbehälter (16) einen Wasser-Füllstand-Detektor (36b) hat, um den Wasser-Füllstand in dem Wasserbehälter (16) zu detektieren, und der Wasser-Füllstand-Detektor (36b) oberhalb des Ionenaustauscher-Abschnitts (28) vorgesehen ist.

9. Brennstoffzellensystem nach Anspruch 1, wobei der Wasserkanal (26) eine gerade Anzahl an Umkehrabschnitten (30a, 30b) hat, um die Strömungsrichtung von dem Wasser vertikal umzukehren.

10. Brennstoffzellensystem nach Anspruch 9, wobei der Wasserbehälter (16) einen Abgabeöffnung-seitigen Wasserkanal-Abschnitt (34c) stromabwärts von dem Umkehrabschnitt (30b) an dem untersten Strömungsabschnitt von dem Wasserkanal (26) hat; und
der Abgabeöffnung-seitige Wasserkanal-Abschnitt (34c) derart konfiguriert ist, dass die zu einem unteren Füllstand von einem geeigneten Bereich von dem Wasser-Füllstand gespeicherte Wassermenge nicht kleiner als die Wassermenge ist, welche zum Stoppen eines Betriebs des Brennstoffzellensystems (10) erforderlich ist.

11. Brennstoffzellensystem nach Anspruch 1, wobei der Wasserkanal (124) eine Mehrzahl von Umkehrabschnitten (126a, 126b) umfasst, um die Strömungsrichtung von dem Wasser lateral umzukehren.

12. Brennstoffzellensystem nach Anspruch 1, wobei das Brennstoffzellenmodul (12) umfasst:
einen Brennstoffzellenstapel (58), welcher ausgebildet ist, indem eine Mehrzahl von Brennstoffzellen (56) gestapelt werden, wobei die Brennstoffzellen (56) jeweils durch Stapeln wenigstens einer Elektrolyt-Elektrodenanordnung (52) und eines Separators (54) ausgebildet sind,
wobei die Elektrolyt-Elektrodenanordnung (52) eine Anode, eine Katode und einen Elektrolyt umfasst, welcher zwischen die Anode und die Katode eingefügt ist;
einen Wärmetauscher (60), um das Sauerstoff-haltige Gas zu erwärmen, bevor das Sauerstoff-haltige Gas dem Brennstoffzellenstapel (58) zugeführt wird;
einen Evaporator (62), um das Wasser zu verdampfen, um aus Roh-Brennstoff einen gemischten Brennstoff zu erzeugen, welcher hauptsächlich Kohlenwasserstoff und Wasserdampf enthält; und
einen Reformer (64), um den gemischten Brennstoff zu reformieren, um ein reformiertes Gas zu erzeugen.

13. Brennstoffzellensystem nach Anspruch 1, wobei das Brennstoffzellenmodul (12) ein Festoxid-Brennstoffzellenmodul ist.

## Revendications

1. Un système de pile à combustible comprenant :
un module de pile à combustible (12) pour générer une énergie électrique par des réactions électrochimiques d'un gaz combustible et d'un gaz contenant de l'oxygène ;
un appareil d'alimentation en eau (14) pour amener de l'eau au module de pile à combustible (12) ;
un réservoir d'eau (16) pour amener de l'eau à l'appareil d'alimentation en eau (14) ;
et
un condenseur (18) pour condenser la vapeur d'eau contenue dans un gaz d'échappement déchargé du module de pile à combustible (12) et amener l'eau condensée au réservoir d'eau (16),
dans lequel le réservoir d'eau (16) possède un orifice d'alimentation (22) pour amener l'eau du condenseur (18) vers le réservoir d'eau (16), un orifice d'évacuation (24) pour envoyer l'eau vers l'appareil d'alimentation en eau (14) et un canal d'eau (26) comme passage de l'eau de l'orifice d'alimentation (22) vers l'orifice d'évacuation (24) ; et
le canal d'eau (26) possède une section échangeuse d'ions (28) pour éliminer des impuretés contenues dans l'eau amenée du condenseur (18) et des sections d'inversion (30a) pour inverser la direction du flux de l'eau,
**caractérisé en ce que**
le réservoir d'eau (16) possède un tuyau d'évacuation de l'eau (38) pour évacuer l'eau excessive du réservoir d'eau (16) lorsque le niveau d'eau dans le réservoir d'eau (16) dépasse une gamme appropriée de niveau d'eau ; et
le tuyau d'évacuation de l'eau (38) et l'orifice d'alimentation (22) sont disposés côte à côte dans une partie de flux à l'extrémité supérieure du réservoir d'eau (16) au-dessus d'une section du canal d'eau côté orifice d'alimentation (34a) du canal d'eau (26).

2. Un système de pile à combustible selon la revendication 1, dans lequel l'orifice d'alimentation (22) est prévu au-dessus de l'orifice d'évacuation (24).

3. Un système de pile à combustible selon la revendication 1, dans lequel la surface en coupe transversale du canal du côté aval du canal d'eau (26) est inférieure à la surface en coupe transversale du canal du côté amont du canal d'eau (26).

4. Un système de pile à combustible selon l'une des revendications 1 à 3, dans lequel chacune des sections d'inversion (30a) est prévue entre la partie amont et la partie aval du canal d'eau (26) et la surface en coupe transversale du canal du côté aval du canal d'eau (26) est inférieure à la surface en coupe transversale du canal du côté amont du canal d'eau (26).

5. Un système de pile à combustible selon la revendication 1, dans lequel la surface en coupe transversale du canal du canal d'eau (26,104) est réduite par paliers ou en continu du côté amont vers le côté aval.

6. Un système de pile à combustible selon la revendication 1, dans lequel le réservoir d'eau (16) possède un niveau d'eau limite supérieur indiquant que le niveau dans le réservoir d'eau (16) se trouve à une limite supérieure d'une gamme appropriée de niveau d'eau et un niveau d'eau limite inférieur indiquant que le niveau dans le réservoir d'eau (16) se trouve à une limite inférieure de la gamme appropriée de niveau d'eau ; et
le niveau d'eau limite supérieur et le niveau d'eau limite inférieur sont situés dans la section d'inversion (30b) positionnée dans la partie à l'extrémité supérieure du réservoir d'eau (16).

7. Un système de pile à combustible selon la revendication 1, dans lequel la section échangeuse d'ions (28) est disposée en dessous d'une gamme appropriée de niveau d'eau.

8. Un système de pile à combustible selon la revendication 1, dans lequel le réservoir d'eau (16) possède un détecteur de niveau d'eau (36b) pour détecter le niveau d'eau dans le réservoir d'eau (16) et le détecteur de niveau d'eau (36b) est disposé au-dessus de la section échangeuse d'ions (28).

9. Un système de pile à combustible selon la revendication 1, dans lequel le canal d'eau (26) possède un nombre pair de sections d'inversion (30a, 30b) pour inverser la direction du flux de l'eau verticalement.

10. Un système de pile à combustible selon la revendication 9, dans lequel le réservoir d'eau (16) possède une section de canal d'eau côté orifice d'évacuation (34) en aval de la section d'inversion (30b) à hauteur de la partie du flux à l'extrémité inférieure du canal d'eau (26) ; et
la section du canal d'eau côté orifice d'évacuation (34c) est configurée de telle sorte que la quantité d'eau stockée à un niveau inférieur d'une gamme appropriée de niveau d'eau n'est pas inférieure à la quantité d'eau nécessaire pour interrompre le fonctionnement du système de pile à combustible (10).

11. Un système de pile à combustible selon la revendication 1, dans lequel le canal d'eau (124) comprend plusieurs sections d'inversion (126a, 126b) pour inverser la direction du flux de l'eau latéralement.

12. Un système de pile à combustible selon la revendication 1, dans lequel le module de pile à combustible (12) comprend :
un empilement de piles à combustible (58) formée en empilant plusieurs piles à combustible (56), les piles à combustible (56) étant chacune formées en empilant au moins un ensemble d'électrodes à électrolyte (52) et un séparateur (54), l'ensemble d'électrodes à électrolyte (52) comprenant une anode, une cathode et un électrolyte interposé entre l'anode et la cathode ;
un échangeur de chaleur (60) pour chauffer le gaz contenant de l'oxygène avant que le gaz contenant de l'oxygène ne soit amené à l'empilement de piles à combustible (58) ;
un évaporateur (62) pour évaporer l'eau afin de produire un combustible mixte de combustible brut contenant principalement des hydrocarbures et de la vapeur d'eau ; et un reformeur (64) pour reformer le combustible mixte afin de produire un gaz reformé.

13. Un système de pile à combustible selon la revendication 1, dans lequel le module de pile à combustible (12) est un module de pile à combustible à oxyde solide.
